(19)

**Europäisches Patentamt**
**European Patent Office**
**Office européen des brevets**

(11) **EP 4 575 885 A1**

(12) **EUROPEAN PATENT APPLICATION**

(43) Date of publication:
**25.06.2025 Bulletin 2025/26**

(21) Application number: **24218198.0**

(22) Date of filing: **06.12.2024**

(51) International Patent Classification (IPC):
**G06F 40/30** (2020.01)  **G06N 3/045** (2023.01)

(52) Cooperative Patent Classification (CPC):
**G06F 40/30; G06N 3/044; G06N 3/045; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.12.2023 CN 202311775116**

(71) Applicants:
• **Beijing Zitiao Network Technology Co., Ltd.**
  **Beijing 100190 (CN)**
• **DOUYIN VISION CO., LTD.**
  **Beijing 100041 (CN)**

(72) Inventors:
• **SHEN, Xicong**
  **Beijing, 100028 (CN)**

• **LIU, Yang**
  **Beijing, 100028 (CN)**
• **LIU, Huiqi**
  **Beijing, 100028 (CN)**
• **HONG, Jue**
  **Beijing, 100028 (CN)**
• **DUAN, Bing**
  **Beijing, 100028 (CN)**
• **WU, Ye**
  **Beijing, 100028 (CN)**
• **WU, Di**
  **Beijing, 100028 (CN)**

(74) Representative: **Dentons UK and Middle East LLP**
**One Fleet Place**
**London EC4M 7WS (GB)**

(54) **MODEL FEDERATED FINE-TUNING METHOD, TEXT CLASSIFICATION METHOD AND APPARATUS, MEDIUM, AND DEVICE**

(57)    The present disclosure relates to a model federated fine-tuning method, a text classification method and apparatus, a medium, and a device. A pre-trained target model includes a first model deployed on a server and second models respectively deployed on at least one client. The fine-tuning method applied to a target client in the at least one client includes: performing word segmentation on a text sample, and generating an embedding vector corresponding to each of a plurality of segmented words by using the second model; determining, from the plurality of segmented words, a target segmented word having classification utility for a text category marked by a classification label; performing noise perturbation processing on embedding vectors corresponding to other segmented words in the plurality of segmented words except the target segmented word to obtain a perturbation vector; and collaboratively fine-tuning a model parameter of the first model with the server and another client based on the perturbation vector, an embedding vector corresponding to the target segmented word, and the classification label. The method can effectively improve the availability of the target model in a classification task while strengthening protection of data privacy of the client.

EP 4 575 885 A1

**Description**

TECHNICAL FIELD

The present disclosure relates to the field of privacy protection, for example, to a model federated fine-tuning method, a text classification method and apparatus, a medium, and a device.

BACKGROUND

In recent years, pre-trained language models (PLMs) represented by bidirectional encoder representations from transformers (BERT) and generative pre-training (GPT) models have shown strong text learning capabilities and are widely used in various fields such as finance, law, and healthcare. To improve the availability of pre-trained language models in downstream applications, a common method is to fine-tune the models on a dataset related to the downstream task. However, due to resource or technical limitations, many users cannot independently obtain pre-trained language models and complete fine-tuning, which has given rise to a new business scenario that combines a language model (LM) with a model-as-a-service (MaaS) ecosystem. In MaaS, a server with sufficient computing resources and technical reserves provides rich pre-trained models, service resources, and core functions, and the client can fine-tune, deploy, and invoke the models by using its own private dataset by accessing a one-stop MaaS platform, thereby customizing a language model that meets its specific needs.

SUMMARY

The Summary is to introduce the concepts in a simplified form, which will be described in detail in the Detailed Description section. The Summary is not intended to identify the key features or essential features of the claimed technical solutions, nor is it intended to be used to limit the scope of the claimed technical solutions.

According to a first aspect, the present disclosure provides a model federated fine-tuning method. A pre-trained target model includes a first model deployed on a server and second models respectively deployed on at least one client. The method is applied to a target client in the at least one client, and includes:

obtaining a text sample and a classification label corresponding to the text sample;
performing word segmentation on the text sample to obtain a plurality of segmented words, and generating an embedding vector corresponding to each of the plurality of segmented words by using a second model deployed on the target client;
determining, from the plurality of segmented words, a target segmented word having classification utility for a text category marked by the classification label;
performing noise perturbation processing on embedding vectors corresponding to other segmented words in the plurality of segmented words except the target segmented word to obtain a perturbation vector; and
collaboratively fine-tuning a model parameter of the first model with the server and another client in the at least one client based on the perturbation vector, an embedding vector corresponding to the target segmented word, and the classification label.

According to a second aspect, the present disclosure provides a text classification method, including:

obtaining a to-be-classified text; and
obtaining a classification prediction result of the to-be-classified text based on the to-be-classified text by using a pre-fine-tuned target model, wherein the target model is fine-tuned by the model federated fine-tuning method according to the first aspect of the present disclosure.

According to a third aspect, the present disclosure provides a model federated fine-tuning apparatus. A pre-trained target model includes a first model deployed on a server and second models respectively deployed on at least one client. The apparatus is applied to a target client in the at least one client, and includes:

a first obtaining module, configured to obtain a text sample and a classification label corresponding to the text sample;
a local computing module, configured to perform word segmentation on the text sample to obtain a plurality of segmented words, and generate an embedding vector corresponding to each of the plurality of segmented words by using a second model deployed on the target client;
a target segmented word determining module, configured to determine, from the plurality of segmented words, a target segmented word having classification utility for a text category marked by the classification label;

a perturbation module, configured to perform noise perturbation processing on embedding vectors corresponding to other segmented words in the plurality of segmented words except the target segmented word to obtain a perturbation vector; and

a fine-tuning module, configured to collaboratively fine-tune a model parameter of the first model with the server and another client in the at least one client based on the perturbation vector, an embedding vector corresponding to the target segmented word, and the classification label.

According to a fourth aspect, the present disclosure provides a text classification apparatus, including:

a second obtaining module, configured to obtain a to-be-classified text; and

a classification module, configured to obtain a classification prediction result of the to-be-classified text based on the to-be-classified text by using a pre-fine-tuned target model, wherein the target model is fine-tuned by the model federated fine-tuning method according to the first aspect of the present disclosure.

According to a fifth aspect, the present disclosure provides a computer-readable medium having a computer program stored thereon, wherein when the program is executed by a processing device, the steps of the model federated fine-tuning method according to the first aspect of the present disclosure or the steps of the text classification method according to the second aspect of the present disclosure are implemented.

According to a sixth aspect, the present disclosure provides an electronic device, including:

a storage device having a computer program stored thereon; and

a processing device configured to execute the computer program in the storage device, to implement the steps of the model federated fine-tuning method according to the first aspect of the present disclosure or the steps of the text classification method according to the second aspect of the present disclosure.

In the above technical solution, a pre-trained target model includes a first model deployed on a server and second models respectively deployed on at least one client, that is, only a part (that is, a second model) of the target model is disclosed to each client participating in model federated fine-tuning, thereby guaranteeing the model privacy of the server to a certain extent. In addition, noise perturbation is only performed on segmented words that do not have classification utility for a text category marked by a classification label in a plurality of segmented words corresponding to a text sample, so that perturbation to a target segmented word having classification utility for the text category marked by the classification label is reduced, where the target segmented word has an important impact on model classification performance. This adaptive perturbation mechanism provides a more ingenious trade-off between the availability of the target model and the data privacy of the client, and effectively improves the availability of the target model in a downstream classification task while strengthening protection of data privacy of the client.

The other features and advantages of the present disclosure will be described in detail in the following specific implementations.

BRIEF DESCRIPTION OF DRAWINGS

The above and other features, advantages, and aspects of the embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale. In the drawings:

Fig. 1 is a flowchart of a model federated fine-tuning method according to an exemplary embodiment.
Fig. 2 is a schematic diagram of a model federated fine-tuning process according to an exemplary embodiment.
Fig. 3 is a flowchart of a text classification method according to an exemplary embodiment.
Fig. 4 is a block diagram of a model federated fine-tuning apparatus according to an exemplary embodiment.
Fig. 5 is a block diagram of a text classification apparatus according to an exemplary embodiment.
Fig. 6 is a schematic structural diagram of an electronic device according to an exemplary embodiment.

DETAILED DESCRIPTION

The inventor(s) of the present application found that, while providing the client with an efficient and customizable LM service, MaaS also brings the risk of model privacy leakage on the server and data privacy leakage on the client. Specifically, on the one hand, because the pre-training process consumes a lot of resources, the weights of the PLM are usually regarded as the proprietary data of the server and cannot be directly disclosed. On the other hand, the text data of the client usually contains personal identity information, trade secrets, and the like. Directly disclosing original data to the server will lead to serious privacy leakage, which undoubtedly hinders privacy-conscious clients from using customized services.

In the related art, to protect the model privacy, the server deploys the backbone part of the PLM on a cloud server in a black box form, and only discloses an embedding block to the client. To protect data privacy, the client adds noise perturbation to an embedding vector of an input text, and sends a perturbed embedding vector to the server to complete subsequent model fine-tuning. Because the introduction of noise perturbation by the client will inevitably lead to a decrease in the availability of the model in the downstream task, a good trade-off between the model availability and data privacy protection cannot be achieved.

In view of this, the present disclosure provides a model federated fine-tuning method, a text classification method and apparatus, a medium, and a device.

Embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. In addition, additional steps may be included and/or the execution of the illustrated steps may be omitted in the method implementations. The scope of the present disclosure is not limited in this respect.

The terms "include", "comprise", and their variations used herein are an open-ended inclusion, that is, "including but not limited to". The term "based on" is "at least partially based on". The term "an embodiment" means "at least one embodiment"; the term "another embodiment" means "at least one another embodiment"; and the term "some embodiments" means "at least some embodiments". The related definitions of other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or their interdependence.

It should be noted that the modifiers "one" and "a plurality of" mentioned in the present disclosure are illustrative and not restrictive, and those skilled in the art should understand that unless the context clearly indicates otherwise, they should be understood as "one or more".

The names of messages or information exchanged between a plurality of apparatuses/devices in the implementations of the present disclosure are used for illustrative purposes only, and are not used to limit the scope of these messages or information.

It can be understood that before using the technical solutions disclosed in the embodiments of the present disclosure, the user should be informed of the types, scope of use, usage scenarios, and the like of the personal information involved in the present disclosure and obtain the user's authorization in an appropriate manner in accordance with relevant laws and regulations.

For example, when receiving an active request from the user, a prompt message is sent to the user to explicitly prompt the user that the operation requested by the user will need to obtain and use the user's personal information. Therefore, the user can independently choose whether to provide personal information to a software or hardware such as an electronic device, an application, a server, or a storage medium that executes the operation of the technical solution of the present disclosure based on the prompt information.

As an optional but non-limiting implementation, for example, in response to receiving an active request from the user, the manner of sending a prompt message to the user may be in the form of a pop-up window, and the prompt message may be presented in the pop-up window in the form of text. In addition, the pop-up window may also carry a selection control for the user to select "agree" or "disagree" to provide personal information to the electronic device.

It can be understood that the above notification and user authorization acquisition process is only illustrative and does not limit the implementation of the present disclosure. Other methods that meet relevant laws and regulations may also be applied to the implementation of the present disclosure.

Meanwhile, it can be understood that the data involved in the technical solution of the present disclosure (including but not limited to the data itself, data acquisition, or data use) shall comply with the requirements of corresponding laws, regulations, and relevant provisions.

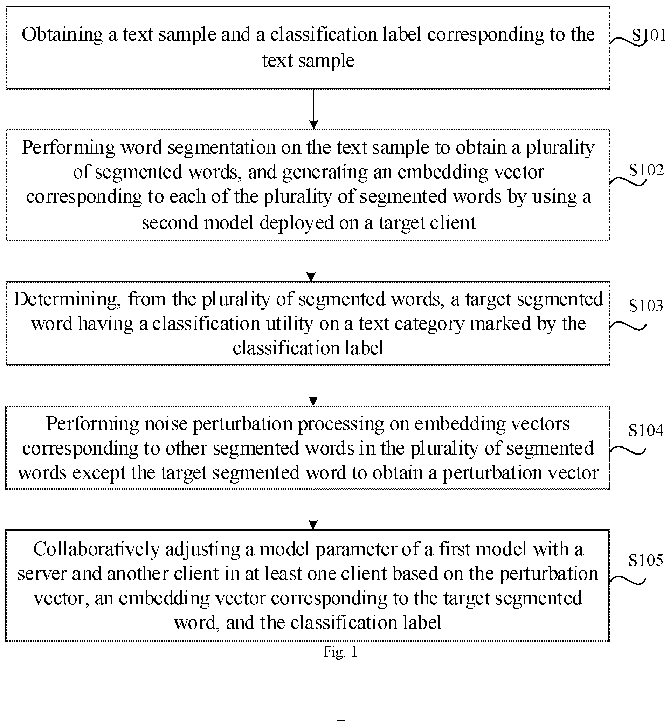

Fig. 1 is a flowchart of a model federated fine-tuning method according to an exemplary embodiment. In the present disclosure, to improve the training efficiency of the model, the target model may be pre-trained on the server first, and then the pre-trained target model may be fine-tuned by using a split-and-privatize (SAP) federated fine-tuning framework. The SAP federated fine-tuning framework may include the server and at least one client, the pre-trained target model is divided into a first model deployed on the server and second models respectively deployed on the clients (that is, each client in the SAP federated fine-tuning framework is deployed with a second model), where the first model is a top-level model and the second model is a bottom-level model, that is, an output of the second model is used as an input of the first model. In a possible implementation, the target model may be a language model.

For example, the SAP federated fine-tuning framework includes the server and one client, then the first model is deployed on the server and the second model is deployed on the one client.

For another example, the SAP federated fine-tuning framework includes the server and three clients, then the first model is deployed on the server and each of the three clients is deployed with the second model, and the model structures and model parameters of the second models deployed on the clients are all the same.

In the present disclosure, a segmentation position of the target model may be determined based on an actual application scenario, to divide the model into the first model and the second model. The second model of the target client includes at least an embedding block, and the embedding block includes a plurality of embedding layers.

In an implementation, the second model of the target client includes an embedding block, and is configured to convert segmented words corresponding to a text into embedding vectors (that is, text representations), where the embedding block may include a plurality of cascaded embedding layers, and the first model may include an encoder and an output layer which are cascaded, where the encoder includes a plurality of cascaded encoding modules, a first encoding module of the plurality of cascaded encoding modules is connected to a last embedding layer in the embedding block, and a last encoding module of the plurality of cascaded encoding modules is connected to the output layer, where the encoder is configured to learn a generalized representation of the text, and the output layer is constructed based on an attribute of a downstream task, and processes the generalized representation output by the encoder into a model output (that is, a classification prediction result) based on a specific task requirement.

In another implementation, the second model of the target client includes an embedding block and at least one encoding module that are cascaded, and is configured to convert segmented words corresponding to a text into embedding vectors (that is, text representations), where the embedding block may include a plurality of cascaded embedding layers, and the encoding module is configured to learn a generalized representation of the text. When the second model of the target client includes a plurality of encoding modules, the plurality of encoding modules are cascaded, and a first encoding module of the plurality of encoding modules is connected to a last embedding layer of the embedding block. The first model may include an encoder and an output layer which are cascaded, where the encoder includes a plurality of cascaded encoding modules, a last encoding module of the plurality of cascaded encoding modules is connected to the output layer, and a first encoding module of the plurality of cascaded encoding modules is connected to a last encoding module of the second model, where the encoder is configured to further learn a generalized representation of the text, and the output layer is constructed based on an attribute of a downstream task, and processes the generalized representation output by the encoder into a model output (that is, a classification prediction result) based on a specific task requirement.

The above model federated fine-tuning method may be applied to a target client in the at least one client in the above SAP federated fine-tuning framework, where the target client may be any one of the at least one client, or may be a client that meets a preset condition in the at least one client. As shown in Fig. 1, the model federated fine-tuning method may include the following S101 to S105.

In S101, a text sample and a classification label corresponding to the text sample are obtained.

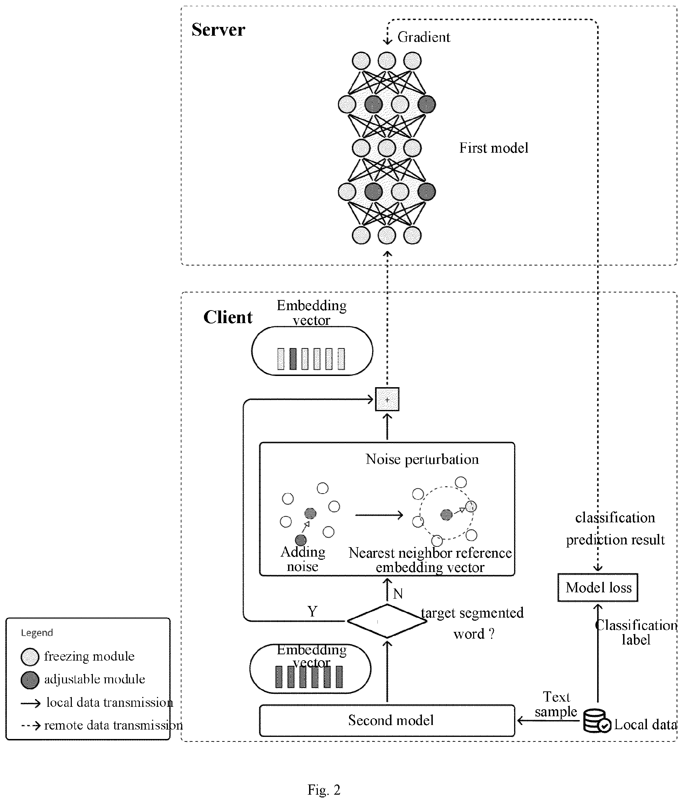

In the present disclosure, considering the data privacy of the client, the text sample and the classification label may both be located locally on the target client, that is, the text sample and the corresponding classification label do not leave the local (that is, local data shown in Fig. 2) of the target client, or may be located on other storage devices.

In S102, word segmentation is performed on the text sample to obtain a plurality of segmented words, and an embedding vector corresponding to each of the plurality of segmented words is generated by using a second model deployed on the target client.

In the present disclosure, the text sample may be segmented based on a vocabulary to obtain a plurality of segmented words; and then each segmented word is separately input to the second model locally on the target client, to obtain an embedding vector corresponding to each of the plurality of segmented words (shown in Fig. 2).

In S103, a target segmented word having classification utility for a text category marked by the classification label is determined from the plurality of segmented words.

In the present disclosure, the classification utility is an indicator for measuring the goodness of classification, and the purpose is to identify the segmented word with a highest contribution (that is, classification utility) to the utility target in each category of text samples. A word that frequently appears in a text sample in a text category marked by the classification label but has a low frequency of occurrence in text samples of other categories is considered as being helpful in distinguishing the text category marked by the classification label from other categories, and these words are considered as having classification utility for the text category marked by the classification label.

In S104, noise perturbation processing is performed on embedding vectors corresponding to other segmented words in the plurality of segmented words except the target segmented word to obtain a perturbation vector.

In the present disclosure, when the second model includes only the embedding block, the computing burden of the client is relatively small, but the server may easily recover a corresponding text content from the transmitted embedding vector through nearest neighbor search. Therefore, after the embedding vector corresponding to each of the plurality of segmented words is generated, the embedding vector is not directly sent to the server, but noise perturbation needs to be performed on the embedding vector to avoid the risk of data privacy leakage of the client caused by the server recovering the corresponding text content from the transmitted embedding vector. However, the introduction of noise perturbation will also lead to a certain loss of model performance while strengthening data privacy protection, and therefore there is a trade-off between model utility and data privacy protection. To improve this trade-off, a segmented word that has an important impact on the model classification performance is first screened out from the plurality of segmented words, that is, the target segmented word having classification utility for the text category marked by the classification label. Then, as shown in Fig. 2, noise perturbation (adding noise) is only performed on a segmented word that does not have classification utility for the text category marked by the classification label in the plurality of segmented words corresponding to the text sample, and perturbation to the target segmented word having classification utility for the text category marked by the classification label is reduced, so that a privacy perturbation is adaptively applied to the embedding vector corresponding to each segmented word by using the privacy protection mechanism, thereby providing a more ingenious trade-off between the availability of the target model and data privacy.

In addition, if the second model includes more encoding modules, the text representation generated based on the second model is more abstract and general, and it becomes more difficult to recover the original text content therefrom.

In 5105, a model parameter of the first model is collaboratively fine-tuned with the server and another client in the at least one client based on the perturbation vector, an embedding vector corresponding to the target segmented word, and the classification label.

In the present disclosure, as shown in Fig. 2, in the process of fine-tuning the model parameter of the first model by using the SAP federated fine-tuning framework, the model parameter of the second model is unchanged, and when the first model is fine-tuned, to reduce the computing cost, a parameter-efficient fine-tuning method may be selected, that is, some parameters of the first model are frozen (that is, a freezing module in Fig. 2), and only the unfrozen parameters (that is, an adjustable module in Fig. 2) of the first model are adjusted.

In the above technical solution, a pre-trained target model includes a first model deployed on a server and second models respectively deployed on at least one client, that is, only a part (that is, a second model) of the target model is disclosed to each client participating in model federated fine-tuning, thereby guaranteeing the model privacy of the server to a certain extent. In addition, noise perturbation is only performed on segmented words that do not have classification utility for a text category marked by a classification label in a plurality of segmented words corresponding to a text sample, so that perturbation to a target segmented word having classification utility for the text category marked by the classification label is reduced, where the target segmented word has an important impact on model classification performance. This adaptive perturbation mechanism provides a more ingenious trade-off between the availability of the target model and the data privacy of the client, and effectively improves the availability of the target model in a downstream classification task while strengthening protection of data privacy of the client.

An exemplary implementation of determining, from the plurality of segmented words, a target segmented word having classification utility for a text category marked by the classification label in the above S103 is described in detail below. For example, this may be implemented through the following steps (1) and (2):

Step (1): Obtaining a classification utility word corresponding to the text category marked by the classification label.

In the present disclosure, the classification utility word is K reference words with highest utility importance (UI) for the text category marked by the classification label in a vocabulary, where the vocabulary is used for performing word segmentation on the text sample, and K is greater than 1. A classification result of the text classification model may include a plurality of preset categories, and a classification utility word corresponding to each of the plurality of preset categories may be preestablished.

Step (2): Determining, as the target segmented word, a segmented word that belongs to the classification utility word in the plurality of segmented words.

The method for determining the classification utility word corresponding to the text category marked by the classification label is described in detail below. For example, this may be implemented through the following steps (a1) to (a3):

Step (a1): For each reference word in the vocabulary, obtaining a frequency of occurrence of the reference word in a text sample of each preset category.

Step (a2): Determining, based on the frequency of occurrence of the reference word in the text sample of each preset category, the utility importance of the reference word for the text category marked by the classification label.

In the present disclosure, a training set on the target client includes a plurality of text samples, and the text samples are divided into a plurality of categories according to text types. For each reference word in the vocabulary, the frequency of occurrence of the reference word in a text sample of each preset category may be obtained through statistical analysis; and then, the utility importance of the reference word for the text category marked by the classification label is determined based on the frequency of occurrence of the reference word in the text sample of each preset category.

Step (a3): Determining, as the classification utility word, K reference words with highest utility importance for the text category marked by the classification label in the vocabulary.

An exemplary implementation of determining, based on the frequency of occurrence of the reference word in the text sample of each preset category, the utility importance of the reference word for the text category marked by the classification label in the above step (a2) is described in detail below. For example, this may be implemented through the following steps (a21) and (a22):

Step (a21): For each of other categories in a plurality of preset categories except the text category marked by the classification label, determining a ratio of a frequency of occurrence of the reference word in a text sample of the text category marked by the classification label to a frequency of occurrence of the reference word in a text sample of each of the other categories.

Step (a22): Determining the utility importance of the reference word for the text category marked by the classification label based on the ratio corresponding to each of the other categories.

In a possible implementation, a sum of logarithms of the ratios corresponding to the other categories may be determined as the utility importance of the reference word for the text category marked by the classification label.

For example, the utility importance of the reference word for the text category marked by the classification label may be determined based on the ratio corresponding to each of the other categories through the following equation:

$$UI_{mc} = \sum_{c', c' \neq c} \ln \frac{p\left(t = t_m \middle| y = c\right)}{p\left(t = t_m \middle| y = c'\right)},$$

where $UI_{mc}$ is the utility importance of a reference word $t_m$ in the vocabulary for a text category $c$ marked by the classification label; $p\left(t = t_m | y = c\right)$ is a frequency of occurrence of the reference word $t_m$ in a text sample of the category $c$; $p\left(t = t_m | y = c'\right)$ is a frequency of occurrence of the reference word $t_m$ in a text sample of another category $c'$; $t$ represents the reference word, and $y$ represents the text category.

For example, the plurality of preset categories include C1, C2, and C3, and the text category marked by the classification label of the text sample is C1. Then, the utility importance of a reference word $t_m$ in the vocabulary for the category C1 can be expressed as

$$UI_{mC1} = \ln \frac{p\left(t = t_m \middle| y = C1\right)}{p\left(t = t_m \middle| y = C2\right)} + \ln \frac{p\left(t = t_m \middle| y = C1\right)}{p\left(t = t_m \middle| y = C3\right)}.$$

An exemplary implementation of performing noise perturbation processing on embedding vectors corresponding to other segmented words in the plurality of segmented words except the target segmented word to obtain a perturbation vector in the above S104 is described in detail below. For example, this may be implemented through the following steps (b1) to (b3):

Step (b1): Performing noise perturbation processing on embedding vectors corresponding to other segmented words in the plurality of segmented words except the target segmented word.

In the present disclosure, as shown in Fig. 2, random noise may be separately added to an embedding vector corresponding to each of the other segmented words in the plurality of segmented words except the target segmented word based on a differential privacy mechanism or a probably approximately correct (PAC) privacy mechanism, to perform the noise perturbation processing. For example, when the noise perturbation processing is performed based on the differential privacy mechanism, a Gaussian mechanism or a random mechanism that satisfies $d\chi$-privacy (a variant of local differential privacy) may be used to separately add random noise to each embedding vector corresponding to each of the other segmented words.

For example, the random mechanism that satisfies $d\chi$-privacy may be used to add random noise to the corresponding embedding vector through the following equation: $\hat{\phi}(x) = \phi(x) + \vec{n}$, $p(\vec{n}) \propto \exp(-\eta \|\vec{n}\|)$, where $\hat{\phi}(x)$ is a vector (that is, an embedding vector obtained after noise perturbation processing) obtained by adding a noise vector $\vec{n}$ to an embedding vector $\phi(x)$, and $p(\vec{n})$ is a probability density function of the noise vector $\vec{n}$; $\eta$ is a parameter in the random

mechanism that satisfies d$\chi$-privacy, and is used to control the noise size. The smaller the $\eta$, the greater the corresponding noise variance, and the stronger the privacy protection capability.

Step (b2): For each embedding vector obtained after noise perturbation processing, determining whether a reference embedding vector corresponding to each reference word in a vocabulary includes the embedding vector.

Step (b3): If the reference embedding vector corresponding to each reference word in the vocabulary does not include the embedding vector, determining, as the perturbation vector, the reference embedding vector that is closest to the embedding vector.

In the present disclosure, the reference embedding vectors corresponding to the reference words in the vocabulary constitute an embedding vector space, and the embedding vector obtained after noise perturbation processing may not necessarily fall in the embedding vector space. Therefore, it is necessary to replace and adjust the embedding vector obtained after noise perturbation processing that does not fall in the embedding vector space. For example, for each embedding vector obtained after noise perturbation processing, it may be first determined whether the embedding vector space includes the embedding vector. If the embedding vector space includes the embedding vector, it indicates that the embedding vector falls in the embedding vector space. At this time, the embedding vector may be directly determined as the corresponding perturbation vector without replacement and adjustment. If the embedding vector space does not include the embedding vector, it indicates that the embedding vector does not fall in the embedding vector space. At this time, as shown in Fig. 2, the embedding vector may be replaced by using the reference embedding vector (that is, the nearest neighbor reference embedding vector) that is closest to the embedding vector in the embedding vector space, i.e., the reference embedding vector that is closest to the embedding vector is determined as the corresponding perturbation vector.

An exemplary implementation of collaboratively fine-tuning a model parameter of the first model with the server and another client in the at least one client based on the perturbation vector, an embedding vector corresponding to the target segmented word, and the classification label in the above S 105 is described in detail below. For example, this may be implemented through the following steps (c1) and (c2).

Step (c1): Sending the perturbation vector and the embedding vector corresponding to the target segmented word to the server, such that the server generates a classification prediction result of the text sample by using the first model based on the perturbation vector and the embedding vector corresponding to the target segmented word, and sends the classification prediction result to the target client.

Step (c2): Determining first gradient information corresponding to an output layer of the first model based on the classification prediction result of the text sample and the classification label, and sending the first gradient information to the server, such that the server updates the model parameter based on the first gradient information and second gradient information which is corresponding to the output layer of the first model and sent by another client.

For example, as shown in Fig. 2, the target client may send each perturbation vector and the embedding vector corresponding to the target segmented word to the server; the server receives each perturbation vector and the embedding vector corresponding to the target segmented word, and then inputs them into the local first model, to obtain a classification prediction result of the text sample, and sends the classification prediction result of the text sample to the target client; the target client determines a model loss of the first model based on the received classification prediction result of the text sample and the classification label of the text sample, and further determines, based on the model loss, the first gradient information corresponding to the output layer of the first model, and sends the first gradient information to the server. When the SAP federated fine-tuning framework includes a plurality of clients, in addition to receiving the first gradient information sent by the target client, the server also receives second gradient information corresponding to the output layer of the first model and sent by each of the other clients except the target client in the plurality of clients. In this case, the server may perform back propagation in the first model based on an average value of the first gradient information and the second gradient information, to update the model parameter of the first model.

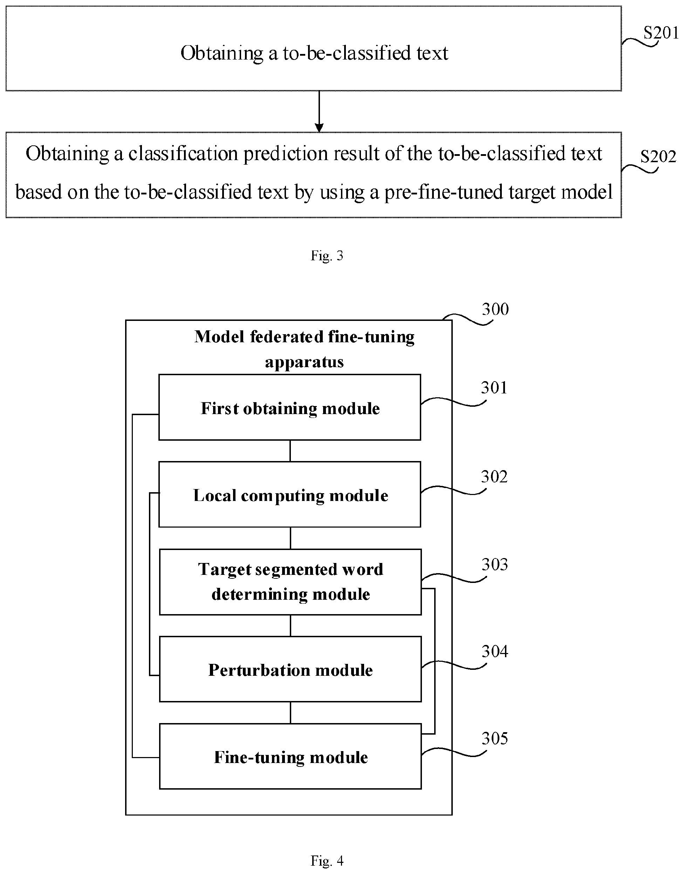

Fig. 3 is a flowchart of a text classification method according to an exemplary embodiment, where the method may be applied to the target client in the at least one client. As shown in Fig. 3, the text classification method may include S201 and S202.

In S201, a to-be-classified text is obtained.

In S202, a classification prediction result of the to-be-classified text is obtained based on the to-be-classified text by using a pre-fine-tuned target model.

In the present disclosure, a classification prediction result of the to-be-classified text may be obtained by using the same forward computation steps as the above model federated fine-tuning method for the to-be-classified text. For example, after the to-be-classified text is segmented, an embedding vector is computed, and the embedding vector is adaptively perturbed, the target client sends the perturbed vector to the server, and then the server generates the classification prediction result of the to-be-classified text by using the first model. The target segmented word in the adaptive perturbation mechanism is the target segmented word determined in the fine-tuning process, and the first model on the server is the first model obtained after the above fine-tuning.

In the above technical solution, a pre-trained target model includes a first model deployed on a server and second models respectively deployed on at least one client, that is, only a part (that is, a second model) of the target model is disclosed to each client participating in model federated fine-tuning, thereby guaranteeing the model privacy of the server to a certain extent. In addition, noise perturbation is only performed on segmented words that do not have classification utility for a text category marked by a classification label in a plurality of segmented words corresponding to a text sample, so that perturbation to a target segmented word having classification utility for the text category marked by the classification label is reduced, where the target segmented word has an important impact on model classification performance. This adaptive perturbation mechanism provides a more ingenious trade-off between the availability of the target model and the data privacy of the client, and effectively improves the availability of the target model in a downstream classification task while strengthening protection of data privacy of the client.

Fig. 4 is a block diagram of a model federated fine-tuning apparatus according to an exemplary embodiment. A pre-trained model includes a first model deployed on a server and second models respectively deployed on at least one client, and the model federated fine-tuning apparatus 300 is applied to a target client in the at least one client, and includes:

a first obtaining module 301, configured to obtain a text sample and a classification label corresponding to the text sample;

a local computing module 302, configured to perform word segmentation on the text sample to obtain a plurality of segmented words, and generate an embedding vector corresponding to each of the plurality of segmented words by using a second model deployed on the target client;

a target segmented word determining module 303, configured to determine, from the plurality of segmented words, a target segmented word having classification utility for a text category marked by the classification label;

a perturbation module 304, configured to perform noise perturbation processing on embedding vectors corresponding to other segmented words in the plurality of segmented words except the target segmented word to obtain a perturbation vector; and

a fine-tuning module 305, configured to collaboratively fine-tune a model parameter of the first model with the server and another client in the at least one client based on the perturbation vector, an embedding vector corresponding to the target segmented word, and the classification label.

In the above technical solution, a pre-trained target model includes a first model deployed on a server and second models respectively deployed on at least one client, that is, only a part (that is, a second model) of the target model is disclosed to each client participating in model federated fine-tuning, thereby guaranteeing the model privacy of the server to a certain extent. In addition, noise perturbation is only performed on segmented words that do not have classification utility for a text category marked by a classification label in a plurality of segmented words corresponding to a text sample, so that perturbation to a target segmented word having classification utility for the text category marked by the classification label is reduced, where the target segmented word has an important impact on model classification performance. This adaptive perturbation mechanism provides a more ingenious trade-off between the availability of the target model and the data privacy of the client, and effectively improves the availability of the target model in a downstream classification task while strengthening protection of data privacy of the client.

Optionally, the target segmented word determining module 303 includes:

an obtaining submodule, configured to obtain a classification utility word corresponding to the text category marked by the classification label, where the classification utility word is K reference words with highest utility importance for the text category marked by the classification label in a vocabulary, the vocabulary is used for performing word segmentation on the text sample, and K is greater than 1; and

a first determining submodule, configured to determine, as the target segmented word, a segmented word that belongs to the classification utility word in the plurality of segmented words.

Optionally, the classification utility word is determined by a utility word determining apparatus, and the utility word determining apparatus may include:

a third obtaining module, configured to, for each reference word in the vocabulary, obtain a frequency of occurrence of the reference word in a text sample of each preset category;

a utility importance determining module, configured to determine, based on the frequency of occurrence of the reference word in the text sample of each preset category, the utility importance of the reference word for the text category marked by the classification label; and

a classification utility word determining module, configured to determine, as the classification utility word, K reference words with highest utility importance for the text category marked by the classification label in the vocabulary.

Optionally, the utility importance determining module includes:

a second determining submodule, configured to, for each of other categories in a plurality of preset categories except the text category marked by the classification label, determine a ratio of a frequency of occurrence of the reference word in a text sample of the text category marked by the classification label to a frequency of occurrence of the reference word in a text sample of each of the other categories; and

a third determining submodule, configured to determine the utility importance of the reference word for the text category marked by the classification label based on the ratio corresponding to each of the other categories.

Optionally, the perturbation module 304 includes:

a processing submodule, configured to perform noise perturbation processing on embedding vectors corresponding to other segmented words in the plurality of segmented words except the target segmented word;

a fourth determining submodule, configured to, for each embedding vector obtained after noise perturbation processing, determine whether a reference embedding vector corresponding to each reference word in a vocabulary includes the embedding vector, where the vocabulary is used for performing word segmentation on the text sample; and

a fifth determining submodule, configured to, if a reference embedding vector corresponding to each reference word in the vocabulary does not include the embedding vector, determine, as the perturbation vector, the reference embedding vector that is closest to the embedding vector.

Optionally, the fine-tuning module 305 includes:

a sending submodule, configured to send the perturbation vector and the embedding vector corresponding to the target segmented word to the server, such that the server generates a classification prediction result of the text sample by using the first model based on the perturbation vector and the embedding vector corresponding to the target segmented word, and sends the classification prediction result to the target client; and

a sixth determining submodule, configured to determine first gradient information corresponding to an output layer of the first model based on the classification prediction result of the text sample and the classification label, and send the first gradient information to the server, such that the server updates the model parameter based on the first gradient information and second gradient information which is corresponding to the output layer and sent by the another client.

Optionally, the second model of the target client includes at least an embedding block, and the embedding block includes a plurality of embedding layers.

Optionally, the second model of the target client includes an embedding block and at least one encoding module.

Optionally, the text sample and the classification label are both located locally on the target client.

It should be noted that the above utility word determining apparatus may be integrated into the above model federated fine-tuning apparatus 300 or may be independent of the above model federated fine-tuning apparatus 300, which is not specifically limited in the present disclosure.

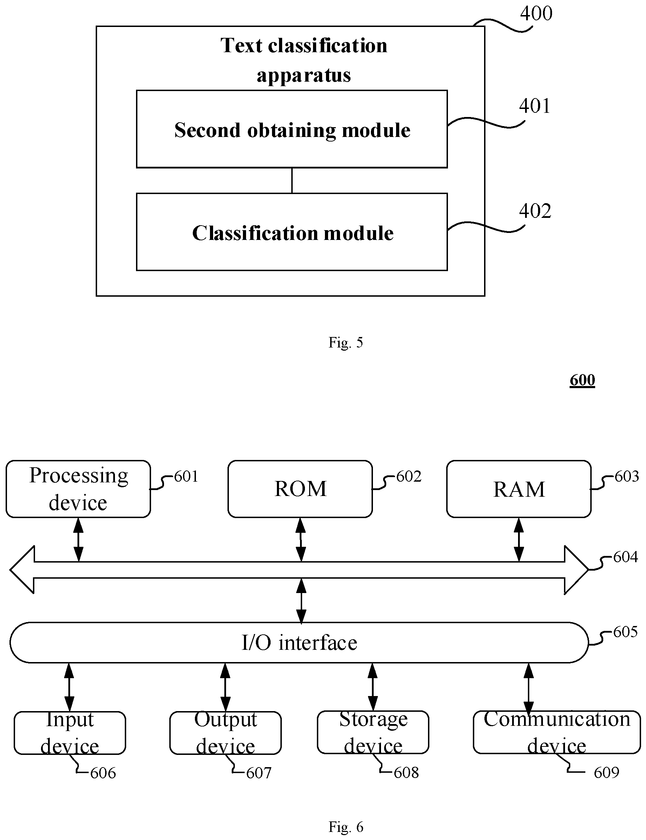

Fig. 5 is a block diagram of a text classification apparatus according to an exemplary embodiment. As shown in Fig. 5, the text classification apparatus 400 includes:

a second obtaining module 401, configured to obtain a to-be-classified text; and

a classification module 402, configured to obtain a classification prediction result of the to-be-classified text based on the to-be-classified text by using a pre-fine-tuned target model, where the target model is obtained through fine-tuning according to the above model federated fine-tuning method provided in the present disclosure.

In the above technical solution, a pre-trained target model includes a first model deployed on a server and second models respectively deployed on at least one client, that is, only a part (that is, a second model) of the target model is disclosed to each client participating in model federated fine-tuning, thereby guaranteeing the model privacy of the server to a certain extent. In addition, noise perturbation is only performed on segmented words that do not have classification utility for a text category marked by a classification label in a plurality of segmented words corresponding to a text sample, so that perturbation to a target segmented word having classification utility for the text category marked by the classification label is reduced, where the target segmented word has an important impact on model classification performance. This adaptive perturbation mechanism provides a more ingenious trade-off between the availability of the target model and the data privacy of the client, and effectively improves the availability of the target model in a downstream classification task while strengthening protection of data privacy of the client.

Reference is made to Fig. 6 below, which is a schematic diagram of a structure of an electronic device (for example, a terminal device or a server) 600 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in Fig. 6 is merely an example, and shall not impose any limitation on the function and scope of use of the embodiments of the present disclosure.

As shown in Fig. 6, the electronic device 600 may include a processing device (for example, a central processing unit, a graphics processing unit, etc.) 601, which may perform various appropriate actions and processing in accordance with a program stored in a read-only memory (ROM) 602 or a program loaded from a storage apparatus 608 into a random-access memory (RAM) 603. The RAM 603 further stores various programs and data required for the operation of the electronic device 600. The processing device 601, the ROM 602, and the RAM 603 are connected to each other through a bus 604. An input/output (I/O) interface 605 is also connected to the bus 604.

Generally, the following devices may be connected to the I/O interface 605: an input device 606 including, for example, a touch screen, a touchpad, a keyboard, a mouse, a camera, a microphone, an accelerometer, and a gyroscope; an output device 607 including, for example, a liquid crystal display (LCD), a speaker, and a vibrator; the storage device 608 including, for example, a magnetic tape and a hard disk; and a communication device 609. The communication device 609 may allow the electronic device 600 to perform wireless or wired communication with other devices to exchange data. Although Fig. 6 shows the electronic device 600 having various devices, it should be understood as requiring neither implementation nor provision of all the shown devices. More or fewer devices may alternatively be implemented or provided.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program codes for performing the method shown in the flowchart. In such an embodiment, the computer program may be downloaded from a network through the communication device 609 and installed, or installed from the storage device 608, or installed from the ROM 602. When the computer program is executed by the processing device 601, the above-mentioned functions defined in the method of the embodiment of the present disclosure are performed.

It should be noted that the above computer-readable medium described in the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, in which computer-readable program codes are carried. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, the client and the server may communicate by using any currently known or future-developed network protocol such as a hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: obtain a text sample and a classification label corresponding to the text sample, where a pre-trained target model includes a first model deployed on a server and second models respectively deployed on at least one client; perform word segmentation on the text sample to obtain a plurality of segmented words, and generate an embedding vector corresponding to each of the plurality of segmented words by using a second model deployed on a target client; determine, from the plurality of segmented words, a target segmented word having classification utility for a text category marked by the classification label; perform noise perturbation processing on embedding vectors corresponding to other segmented words in the plurality of segmented words except the target segmented word to obtain a perturbation vector; and collaboratively fine-tune a model parameter of the first model with the server and another client in the at least one client based on the perturbation vector, an embedding vector corresponding to the target segmented word, and the classification label.

Alternatively, the above computer-readable medium carries one or more programs that, when executed by the electronic device, cause the electronic device to: obtain a to-be-classified text; and obtain a classification prediction result of the to-be-classified text based on the to-be-classified text by using a pre-fine-tuned target model, where the target model is obtained through fine-tuning according to the above model federated fine-tuning method provided in the present disclosure.

The computer program code for performing the operations of the present disclosure may be written in one or more programming languages or a combination thereof, where the programming languages include but are not limited to an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to the computer of the user over any type of network, including a local area network (LAN) or a wide area network (WAN), or may be connected to an external computer (for example, connected over the Internet by using an Internet service provider).

The flowcharts and block diagrams in the accompanying drawings illustrate the possibly implemented architecture, functions, and operations of the system, the method, and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in a reverse order, depending on a function involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules involved in the embodiments of the present disclosure may be implemented by means of software, or may be implemented by means of hardware. The name of a module does not constitute a limitation on the module in some cases. For example, the second obtaining module may also be described as "a module for obtaining a to-be-classified text".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on a chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, Example 1 provides a model federated fine-tuning method. A pre-trained target model includes a first model deployed on a server and second models respectively deployed on at least one client, and the method is applied to a target client in the at least one client. The method includes:

obtaining a text sample and a classification label corresponding to the text sample;
performing word segmentation on the text sample to obtain a plurality of segmented words, and generating an embedding vector corresponding to each of the plurality of segmented words by using a second model deployed on the target client;
determining, from the plurality of segmented words, a target segmented word having classification utility for a text category marked by the classification label;
performing noise perturbation processing on embedding vectors corresponding to other segmented words in the plurality of segmented words except the target segmented word to obtain a perturbation vector; and collaboratively fine-tuning a model parameter of the first model with the server and another client in the at least one client based on the perturbation vector, an embedding vector corresponding to the target segmented word, and the classification label.

According to one or more embodiments of the present disclosure, Example 2 provides the method according to Example 1. The determining, from the plurality of segmented words, a target segmented word having classification utility for a text category marked by the classification label includes:

obtaining a classification utility word corresponding to the text category marked by the classification label, where the classification utility word is K reference words with highest utility importance for the text category marked by the classification label in a vocabulary, the vocabulary is used for performing word segmentation on the text sample, and K is greater than 1; and
determining, as the target segmented word, a segmented word that belongs to the classification utility word in the plurality of segmented words.

According to one or more embodiments of the present disclosure, Example 3 provides the method according to Example 2. The classification utility word is determined in the following manner:

for each reference word in the vocabulary, obtaining a frequency of occurrence of the reference word in a text sample of each preset category; and determining, based on the frequency of occurrence of the reference word in the text sample of each preset category, the utility importance of the reference word for the text category marked by the classification label; and
determining, as the classification utility word, K reference words with highest utility importance for the text category marked by the classification label in the vocabulary.

According to one or more embodiments of the present disclosure, Example 4 provides the method according to Example 3. The determining, based on the frequency of occurrence of the reference word in the text sample of each preset category, the utility importance of the reference word for the text category marked by the classification label includes:

for each of other categories in a plurality of preset categories except the text category marked by the classification label, determining a ratio of a frequency of occurrence of the reference word in a text sample of the text category marked by the classification label to a frequency of occurrence of the reference word in a text sample of each of the other categories; and
determining the utility importance of the reference word for the text category marked by the classification label based on the ratio corresponding to each of the other categories.

According to one or more embodiments of the present disclosure, Example 5 provides the method according to Example 1. The performing noise perturbation processing on embedding vectors corresponding to other segmented words in the plurality of segmented words except the target segmented word to obtain a perturbation vector includes:

performing noise perturbation processing on embedding vectors corresponding to other segmented words in the plurality of segmented words except the target segmented word;
for each embedding vector obtained after noise perturbation processing, determining whether a reference embedding vector corresponding to each reference word in a vocabulary includes the embedding vector, where the vocabulary is used for performing word segmentation on the text sample; and
if the reference embedding vector corresponding to each reference word in the vocabulary does not include the embedding vector, determining, as the perturbation vector, the reference embedding vector that is closest to the embedding vector.

According to one or more embodiments of the present disclosure, Example 6 provides the method according to Example 1. The collaboratively fine-tuning a model parameter of the first model with the server and another client in the at least one client based on the perturbation vector, an embedding vector corresponding to the target segmented word, and the classification label includes:

sending the perturbation vector and the embedding vector corresponding to the target segmented word to the server, such that the server generates a classification prediction result of the text sample by using the first model based on the perturbation vector and the embedding vector corresponding to the target segmented word, and sends the classification prediction result to the target client; and

determining first gradient information corresponding to an output layer of the first model based on the classification prediction result of the text sample and the classification label, and send the first gradient information to the server, such that the server updates the model parameter based on the first gradient information and second gradient information which is corresponding to the output layer and sent by the another client.

According to one or more embodiments of the present disclosure, Example 7 provides the method according to any one of Examples 1 to 6. The second model of the target client includes at least an embedding block, and the embedding block includes a plurality of embedding layers.

According to one or more embodiments of the present disclosure, Example 8 provides the method according to Example 7. The second model of the target client includes an embedding block and at least one encoding module.

According to one or more embodiments of the present disclosure, Example 9 provides the method according to any one of Examples 1 to 6. The text sample and the classification label are both located locally on the target client.

According to one or more embodiments of the present disclosure, Example 10 provides a text classification method, including:

obtaining a to-be-classified text; and

obtaining a classification prediction result of the to-be-classified text based on the to-be-classified text by using a pre-fine-tuned target model, where the target model is obtained through fine-tuning according to the model federated fine-tuning method according to any one of Examples 1 to 9.

According to one or more embodiments of the present disclosure, Example 11 provides a model federated fine-tuning apparatus. A pre-trained target model includes a first model deployed on a server and second models respectively deployed on at least one client, and the apparatus is applied to a target client in the at least one client. The apparatus includes:

a first obtaining module, configured to obtain a text sample and a classification label corresponding to the text sample;

a local computing module, configured to perform word segmentation on the text sample to obtain a plurality of segmented words, and generate an embedding vector corresponding to each of the plurality of segmented words by using a second model deployed on the target client;

a target segmented word determining module, configured to determine, from the plurality of segmented words, a target segmented word having classification utility for a text category marked by the classification label;

a perturbation module, configured to perform noise perturbation processing on embedding vectors corresponding to other segmented words in the plurality of segmented words except the target segmented word to obtain a perturbation vector; and

a fine-tuning module, configured to collaboratively fine-tune a model parameter of the first model with the server and another client in the at least one client based on the perturbation vector, an embedding vector corresponding to the target segmented word, and the classification label.

According to one or more embodiments of the present disclosure, Example 12 provides a text classification apparatus, including:

a second obtaining module, configured to obtain a to-be-classified text; and

a classification module, configured to obtain a classification prediction result of the to-be-classified text based on the to-be-classified text by using a pre-fine-tuned target model, where the target model is obtained through fine-tuning according to the model federated fine-tuning method according to any one of Examples 1 to 9.

According to one or more embodiments of the present disclosure, Example 13 provides a computer-readable medium having a computer program stored thereon, when the program is executed by a processing device, the steps of the method according to any one of Examples 1 to 10 are implemented.

According to one or more embodiments of the present disclosure, Example 14 provides an electronic device, including:

a storage device having a computer program stored thereon; and

a processing device, configured to execute the computer program in the storage device to implement the steps of the method according to any one of Examples 1 to 10.

The above description merely refers to preferred embodiments of the present disclosure and description of the applied technical principles. Persons skilled in the art should understand that the scope of disclosure involved in the present disclosure is not limited to the technical solution formed by the specific combination of the above technical features, and shall also cover other technical solutions formed by any combination of the above technical features or their equivalent features without departing from the above concept of disclosure. For example, a technical solution formed by replacing the above features with technical features with similar functions disclosed in the present disclosure (but not limited to).

In addition, although the operations are depicted in a specific order, this should not be understood as requiring these operations to be performed in the specific order as shown or in a sequential order. Under certain circumstances, multitasking and parallel processing may be advantageous. Similarly, although several specific implementation details are included in the foregoing discussions, these details should not be construed as limiting the scope of the present disclosure. Some features described in the context of separate embodiments may also be implemented in combination in a single embodiment. In contrast, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are merely exemplary forms of implementing the claims. With respect to the apparatus in the above embodiment, a specific manner in which each module performs an operation has been described in detail in the embodiment related to the method, and will not be elaborated here.

## Claims

1. A model federated fine-tuning method, wherein a pre-trained target model comprises a first model deployed on a server and second models respectively deployed on at least one client, the method is applied to a target client in the at least one client and comprises:

   obtaining a text sample and a classification label corresponding to the text sample;
   performing word segmentation on the text sample to obtain a plurality of segmented words, and generating an embedding vector corresponding to each of the plurality of segmented words by using a second model deployed on the target client;
   determining, from the plurality of segmented words, a target segmented word having classification utility for a text category marked by the classification label;
   performing noise perturbation processing on embedding vectors corresponding to other segmented words in the plurality of segmented words except the target segmented word to obtain a perturbation vector; and
   collaboratively fine-tuning a model parameter of the first model with the server and another client in the at least one client based on the perturbation vector, an embedding vector corresponding to the target segmented word, and the classification label.

2. The method according to claim 1, wherein the determining, from the plurality of segmented words, a target segmented word having classification utility for a text category marked by the classification label comprises:

   obtaining a classification utility word corresponding to the text category marked by the classification label, wherein the classification utility word is K reference words with highest utility importance for the text category marked by the classification label in a vocabulary, and the vocabulary is used for performing word segmentation on the text sample, where K is greater than 1; and
   determining, as the target segmented word, a segmented word that belongs to the classification utility word in the plurality of segmented words.

3. The method according to claim 2, wherein the classification utility word is determined in the following manner:

   for each reference word in the vocabulary, obtaining a frequency of occurrence of the reference word in a text sample of each preset category; and determining, based on the frequency of occurrence of the reference word in the text sample of each preset category, the utility importance of the reference word for the text category marked by the classification label; and
   determining, as the classification utility word, K reference words with highest utility importance for the text category marked by the classification label in the vocabulary.

4. The method according to claim 3, wherein the determining, based on the frequency of occurrence of the reference word in the text sample of each preset category, the utility importance of the reference word for the text category marked by the classification label comprises:

for each of other categories of a plurality of preset categories except the text category marked by the classification label, determining a ratio of a frequency of occurrence of the reference word in a text sample of the text category marked by the classification label to a frequency of occurrence of the reference word in a text sample of each of the other categories; and
determining the utility importance of the reference word for the text category marked by the classification label based on the ratio corresponding to each of the other categories.

5. The method according to claim 1, wherein the performing noise perturbation processing on embedding vectors corresponding to other segmented words in the plurality of segmented words except the target segmented word to obtain a perturbation vector comprises:

performing noise perturbation processing on embedding vectors corresponding to other segmented words in the plurality of segmented words except the target segmented word;
for each embedding vector obtained after noise perturbation processing, determining whether a reference embedding vector corresponding to each reference word in a vocabulary comprises the embedding vector, wherein the vocabulary is used for performing word segmentation on the text sample; and
in response to the reference embedding vector corresponding to each reference word in the vocabulary not comprising the embedding vector, determining, as the perturbation vector, the reference embedding vector that is closest to the embedding vector.

6. The method according to claim 1, wherein the collaboratively fine-tuning a model parameter of the first model with the server and another client in the at least one client based on the perturbation vector, an embedding vector corresponding to the target segmented word, and the classification label comprises:

sending the perturbation vector and the embedding vector corresponding to the target segmented word to the server, such that the server generates a classification prediction result of the text sample by using the first model based on the perturbation vector and the embedding vector corresponding to the target segmented word, and sends the classification prediction result to the target client; and
determining first gradient information corresponding to an output layer of the first model based on the classification prediction result of the text sample and the classification label, and sending the first gradient information to the server, such that the server updates the model parameter based on the first gradient information and second gradient information which is corresponding to the output layer and sent by the another client.

7. The method according to any one of claims 1 to 6, wherein the second model of the target client comprises at least an embedding block, and the embedding block comprises a plurality of embedding layers.

8. The method according to claim 7, wherein the second model of the target client comprises an embedding block and at least one encoding module.

9. The method according to any one of claims 1 to 6, wherein the text sample and the classification label are both located locally on the target client.

10. A text classification method, comprising:

obtaining a to-be-classified text; and
obtaining a classification prediction result of the to-be-classified text based on the to-be-classified text by using a pre-fine-tuned model, wherein the model is obtained by the model federated fine-tuning method according to any one of claims 1 to 9.

11. A model federated fine-tuning apparatus, wherein a pre-trained target model comprises a first model deployed on a server and second models respectively deployed on at least one client, and the apparatus is applied to a target client in the at least one client and comprises:

a first obtaining module, configured to obtain a text sample and a classification label corresponding to the text sample;

a local computing module, configured to perform word segmentation on the text sample to obtain a plurality of segmented words, and generate an embedding vector corresponding to each of the plurality of segmented words by using a second model deployed on the target client;

a target segmented word determining module, configured to determine, from the plurality of segmented words, a target segmented word having classification utility for a text category marked by the classification label;

a perturbation module, configured to perform noise perturbation processing on embedding vectors corresponding to other segmented words in the plurality of segmented words except the target segmented word to obtain a perturbation vector; and

a fine-tuning module, configured to collaboratively fine-tune a model parameter of the first model with the server and another client in the at least one client based on the perturbation vector, the embedding vector corresponding to the target segmented word, and the classification label.

12. A text classification apparatus, comprising:

a second obtaining module, configured to obtain a to-be-classified text; and

a classification module, configured to obtain a classification prediction result of the to-be-classified text based on the to-be-classified text by using a pre-fine-tuned target model, wherein the target model is fine-tuned by the model federated fine-tuning method according to any one of claims 1 to 9.

13. A computer-readable medium having a computer program stored thereon, wherein when the computer program is executed by a processing device, steps of the method according to any one of claims 1 to 10 are implemented.

14. An electronic device, comprising:

a storage device having a computer program stored thereon; and

a processing device configured to execute the computer program in the storage device, to implement steps of the method according to any one of claims 1 to 10.

Obtaining a text sample and a classification label corresponding to the text sample ~ S101

Performing word segmentation on the text sample to obtain a plurality of segmented words, and generating an embedding vector corresponding to each of the plurality of segmented words by using a second model deployed on a target client ~ S102

Determining, from the plurality of segmented words, a target segmented word having a classification utility on a text category marked by the classification label ~ S103

Performing noise perturbation processing on embedding vectors corresponding to other segmented words in the plurality of segmented words except the target segmented word to obtain a perturbation vector ~ S104

Collaboratively adjusting a model parameter of a first model with a server and another client in at least one client based on the perturbation vector, an embedding vector corresponding to the target segmented word, and the classification label ~ S105

Fig. 1

=

Fig. 2

| Obtaining a to-be-classified text | S201 |

↓

| Obtaining a classification prediction result of the to-be-classified text based on the to-be-classified text by using a pre-fine-tuned target model | S202 |

Fig. 3

300

**Model federated fine-tuning apparatus**

| First obtaining module | 301 |

| Local computing module | 302 |

| Target segmented word determining module | 303 |

| Perturbation module | 304 |

| Fine-tuning module | 305 |

Fig. 4

**400**

### Text classification apparatus

**Second obtaining module** — 401

**Classification module** — 402

Fig. 5

**600**

Processing device —601 | ROM —602 | RAM —603

604

I/O interface —605

Input device —606 | Output device —607 | Storage device —608 | Communication device — 609

Fig. 6

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIJIE HU ET AL: "Differentially Private Natural Language Models: Recent Advances and Future Directions", ARXIV.ORG, CORNELL UNIVERSITY LIBRARY, 201 OLIN LIBRARY CORNELL UNIVERSITY ITHACA, NY 14853, 22 January 2023 (2023-01-22), XP091419508, * sections 2.2, 3, 3.3, 4, 4.1, 4.2 * | 1-14 | INV. G06F40/30 G06N3/045 |
| A | YU DA ET AL: "Differentially Private Fine-tuning of Language Models", JOURNAL OF PRIVACY AND CONFIDENTIALITY, vol. 14, no. 2, 18 July 2022 (2022-07-18), XP093270074, ISSN: 2575-8527, DOI: 10.29012/jpc.880 Retrieved from the Internet: URL:https://arxiv.org/pdf/2110.06500> * the whole document * | 1-14 | |
| A | DANUSHKA BOLLEGALA ET AL: "A Neighbourhood-Aware Differential Privacy Mechanism for Static Word Embeddings", ARXIV.ORG, CORNELL UNIVERSITY LIBRARY, 201 OLIN LIBRARY CORNELL UNIVERSITY ITHACA, NY 14853, 19 September 2023 (2023-09-19), XP091617267, * the whole document * | 1-14 | **TECHNICAL FIELDS SEARCHED (IPC)** G06F G06N |

-/--

The present search report has been drawn up for all claims

| Place of search | Date of completion of the search | Examiner |
|---|---|---|
| Berlin | 14 April 2025 | Lechenne, Laurence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 21 8198

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI ANRAN ET AL: "FedSDG-FS: Efficient and Secure Feature Selection for Vertical Federated Learning", IEEE INFOCOM 2023 - IEEE CONFERENCE ON COMPUTER COMMUNICATIONS, IEEE, 17 May 2023 (2023-05-17), pages 1-10, XP034412348, DOI: 10.1109/INFOCOM53939.2023.10228895 [retrieved on 2023-08-30] * the whole document * | 1-14 | |
| A | CN 116 775 865 A (UNIV NORTHEASTERN) 19 September 2023 (2023-09-19) * the whole document * | 1-14 | |
| A | GAN WENSHENG ET AL: "Model-as-a-Service (MaaS): A Survey", 2023 IEEE INTERNATIONAL CONFERENCE ON BIG DATA (BIGDATA), IEEE, 15 December 2023 (2023-12-15), pages 4636-4645, XP034521372, DOI: 10.1109/BIGDATA59044.2023.10386351 [retrieved on 2024-01-22] * the whole document * | 1-14 | |

TECHNICAL FIELDS
SEARCHED (IPC)

The present search report has been drawn up for all claims

| Place of search | Date of completion of the search | Examiner |
|---|---|---|
| Berlin | 14 April 2025 | Lechenne, Laurence |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 8198

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| CN 116775865 A | 19-09-2023 | NONE | |